# EUROPEAN PATENT APPLICATION

(11) **EP 4 757 379 A1**
(43) Date of publication of application: **10.06.2026**
(21) Application number: 23947874.6
(22) Date of filing: 04.08.2023
(51) Int. Cl.: H04W 16/28, H04W 64/00

(54) **COMMUNICATION METHOD, TERMINAL, NETWORK DEVICE, AND STORAGE MEDIUM**

(71) Applicant: Beijing Xiaomi Mobile Software Co., Ltd., Beijing 100085 (CN)
(72) Inventor: LUO, Xingyi, Beijing 100085 (CN)
(74) Representative: Gunzelmann, Rainer
(86) International application number: PCT/CN2023/111345
(87) International publication number: WO 2025/030291

(57) **Abstract**

The present disclosure relates to a communication method, a terminal, a network device, and a storage medium. The communication method comprises: sending first information to a candidate cell, wherein the first information is used for acquiring a timing advance (TA) that corresponds to the candidate cell; and determining a first beam indicated by a first transmission configuration indicator (TCI) state, wherein the first beam is used for receiving the TA that corresponds to the candidate cell and is sent by a serving cell. According to the present disclosure, a terminal determines a beam for receiving a TA sent by a serving cell, so that the terminal can accurately receive the TA. Therefore, rapid switching can be carried out on the basis of the TA of the candidate cell in a subsequent cell handover process, thereby reducing the delay of cell handover and improving the efficiency of cell handover.

## Description

### FIELD

The present invention relates to the field of communication technology, and in particular to a communication method, a terminal, a network device and a storage medium.

### BACKGROUND

In L1/L2 based inter-cell mobility (LTM for short) management, to reduce the time for cell handover of a terminal, a timing advance (TA) of a candidate cell is measured in advance. That is, a serving cell triggers a terminal to initiate random access to a candidate cell to measure the TA, and the measured TA is indicated to the terminal by the serving cell.

### SUMMARY

In an LTM scenario, since information indicating a timing advance of a candidate cell is sent by a serving cell instead of the candidate cell receiving a preamble sequence, there is no consensus on how the terminal receives the information sent by the serving cell.

Embodiments of the present invention provide a communication method, a terminal, a network device, and a storage medium.

According to a first aspect of embodiments of the present invention, a communication method is provided, which is performed by a terminal, and includes: sending first information to a candidate cell, where the first information is configured for obtaining a timing advance (TA) corresponding to the candidate cell; and determining a first beam indicated by a first transmission configuration indication (TCI) state, where the first beam is configured for receiving the TA corresponding to the candidate cell sent by a serving cell.

According to a second aspect of embodiments of the present invention, a communication method is provided, which is performed by a serving cell, and includes: sending a timing advance (TA) corresponding to a candidate cell to a terminal by using a first beam indicated by a first transmission configuration indication (TCI) state, where the TA is determined by the candidate cell according to first information sent by the terminal.

According to a third aspect of embodiments of the present invention, a communication method is provided, which includes that: a terminal sends first information to a candidate cell, and the first information is configured for obtaining a timing advance (TA) corresponding to the candidate cell; the candidate cell sends the TA to a serving cell; and the serving cell sends the TA to the terminal by using a first beam indicated by a first transmission configuration indication (TCI) state.

According to a fourth aspect of embodiments of the present invention, a terminal is provided, which includes a transceiver module and a processing module. The transceiver module is configured to send first information to a candidate cell, and the first information is configured for obtaining a timing advance (TA) corresponding to the candidate cell. The processing module is configured to determine a first beam indicated by a first transmission configuration indication (TCI) state, and the first beam is configured for receiving the TA corresponding to the candidate cell sent by a serving cell.

According to a fifth aspect of embodiments of the present invention, a network device is provided, which includes a transceiver module, the transceiver module is configured to send a timing advance (TA) corresponding to a candidate cell to a terminal by using a first beam indicated by a first transmission configuration indication (TCI) state, and the TA is determined by the candidate cell according to first information sent by the terminal.

According to a sixth aspect of embodiments of the present invention, a terminal is provided, which includes one or more processors, and is configured to perform the communication method as described in the first aspect and any items thereof.

According to a seventh aspect of embodiments of the present invention, a network device is provided, which includes one or more processors, and is configured to perform the communication method as described in the second aspect and any items thereof.

According to an eighth aspect of embodiments of the present invention, a communication system is provided, which includes: a terminal configured to perform the communication method as described in the first aspect and any items thereof, and a network device configured to perform the communication method as described in the second aspect and any items thereof.

According to a ninth aspect of embodiments of the present invention, a storage medium is provided, which has stored therein instructions that, when run on a communication device, cause the communication device to perform the communication method as described in the first aspect and any items thereof or as described in the second aspect and any items thereof.

In the present invention, the beam for receiving the TA sent by the serving cell is determined for the terminal, so that the terminal is capable of accurately receiving the TA, and in a subsequent cell handover process, handover may be performed quickly based on the TA of the candidate cell, reducing the delay of the cell handover and improving the efficiency of the cell handover.

### BRIEF DESCRIPTION OF THE DRAWINGS

In order to more clearly illustrate technical solutions according to embodiments of the present invention, drawings required for describing embodiments of the present invention are introduced below. The following drawings only involve some embodiments of the present invention and do not impose specific limitations on the protection scope of the present invention.
FIG. 1a is a schematic diagram showing an architecture of a communication system according to embodiments of the present invention.
FIG. 1b is a schematic diagram showing a movement scenario of a terminal according to an example embodiment.
FIG. 1c is a schematic diagram showing signaling interaction for cell handover according to an example embodiment.
FIG. 2 is a schematic interactive diagram of a communication method according to embodiments of the present invention.
FIG. 3 is a schematic flowchart of a communication method according to an example embodiment.
FIG. 4 is a schematic flowchart of another communication method according to an example embodiment.
FIG. 5 is a schematic flowchart of another communication method according to an example embodiment.
FIG. 6 is a schematic timing diagram according to an example embodiment.
FIG. 7a is a schematic block diagram of a communication apparatus according to an example embodiment.
FIG. 7b is a schematic block diagram of another communication apparatus according to an example embodiment.
FIG. 8a is a schematic block diagram of a communication device according to an example embodiment.
FIG. 8b is a schematic block diagram of a chip according to an example embodiment.

### DETAILED DESCRIPTION

Embodiments of the present invention provide a communication method, a terminal, a network device, and a storage medium.

In a first aspect, embodiments of the present invention provide a communication method, which is performed by a terminal and includes: sending first information to a candidate cell, where the first information is configured for obtaining a timing advance (TA) corresponding to the candidate cell; and determining a first beam indicated by a first transmission configuration indication (TCI) state, where the first beam is configured for receiving the TA corresponding to the candidate cell sent by a serving cell.

In above embodiments, the beam for receiving the TA sent by the serving cell is determined for the terminal, so that the terminal is capable of accurately receiving second information, and in a subsequent cell handover process, handover may be performed quickly based on the TA of the candidate cell in the second information, reducing the delay of the cell handover and improving the efficiency of the cell handover.

In combination with some embodiments of the first aspect, the first TCI state includes at least one of: a TCI state for receiving second information, where the second information is configured to trigger the terminal to send the first information to the candidate cell; a TCI state indicated by the serving cell for the terminal; or a TCI state indicated by the serving cell for a typel physical downlink control channel (PDCCH).

In above embodiments, multiple possible situations of the beam for receiving the TA are provided to adapt to different scenarios, so that an appropriate beam may be used to receive the TA, so as to facilitate fast handover based on the TA of the candidate cell in a subsequent cell handover process, reduce the delay of the cell handover, and improve the efficiency of the cell handover.

In combination with some embodiments of the first aspect, the first TCI state includes: a TCI state indicated by the serving cell for the terminal, and a TCI state indicated by the serving cell for a type1 PDCCH, the TCI state indicated by the serving cell for the type1 PDCCH is configured for receiving the type1 PDCCH, and the TCI state indicated by the serving cell for the terminal is configured for receiving a physical downlink shared channel (PDSCH) scheduled by the typel PDCCH.

In above embodiments, the beam for receiving the TA may include multiple different beams, so that the terminal is able to use suitable beams to receive the PDCCH and the PDSCH scheduled by the PDCCH, so as to obtain the TA in the PDSCH, which facilitates fast handover based on the TA of the candidate cell in a subsequent cell handover process, thereby reducing the delay of the cell handover, and improving the efficiency of the cell handover.

In combination with some embodiments of the first aspect, the method further includes: retransmitting the first information to the candidate cell, in a case where the terminal fails to receive the TA by using the first beam.

In above embodiments, the first information is retransmitted, which ensures that the terminal is able to accurately receive the TA of the candidate cell, so that in a subsequent cell handover process, handover may be performed quickly based on the TA of the candidate cell, reducing the delay of the cell handover and improving the efficiency of the cell handover.

In combination with some embodiments of the first aspect, the method further includes: receiving the TA sent by the serving cell by using a second beam indicated by a second TCI state.

In above embodiments, the second beam is used to receive the TA, which ensures that the terminal is able to accurately receive the TA of the candidate cell, so that in a subsequent cell handover process, handover may be performed quickly based on the TA of the candidate cell, reducing the delay of the cell handover and improving the efficiency of the cell handover.

In combination with some embodiments of the first aspect, the second TCI state includes at least one of: a TCI state for receiving second information, where the second information is configured to trigger the terminal to send the first information to the candidate cell; a TCI state indicated by the serving cell for the terminal; or a TCI state indicated by the serving cell for a typel PDCCH.

In above embodiments, multiple possible situations of the beam for receiving the TA are provided to adapt to different scenarios, so that an appropriate beam may be used to receive the TA, so as to facilitate fast handover based on the TA of the candidate cell in a subsequent cell handover process, reduce the delay of the cell handover, and improve the efficiency of the cell handover.

In combination with some embodiments of the first aspect, the second TCI state includes: a TCI state indicated by the serving cell for the terminal, and a TCI state indicated by the serving cell for a type1 PDCCH; the TCI state indicated by the serving cell for the typel PDCCH is configured for receiving the typel PDCCH, and the TCI state indicated by the serving cell for the terminal is configured for receiving a PDSCH scheduled by the typel PDCCH.

In above embodiments, the beam for receiving the TA may include multiple different beams, so that the terminal is able to use suitable beams to receive the PDCCH and the PDSCH scheduled by the PDCCH, so as to obtain the TA in the PDSCH, which facilitates fast handover based on the TA of the candidate cell in a subsequent cell handover process, thereby reducing the delay of the cell handover, and improving the efficiency of the cell handover.

In combination with some embodiments of the first aspect, retransmitting the first information to the candidate cell includes: retransmitting the first information to the candidate cell by using a third beam indicated by third information, and the third information is configured to trigger the terminal to send the first information to the candidate cell.

In above embodiments, the beam for retransmitting the first information is provided, so that the first information is retransmitted through the beam. In this way, the TA can be accurately received, and in a subsequent cell handover process, handover may be performed quickly based on the TA of the candidate cell, thereby reducing the delay of the cell handover and improving the efficiency of the cell handover.

In combination with some embodiments of the first aspect, retransmitting the first information to the candidate cell includes: retransmitting the first information to the candidate cell by using a fourth beam, and the fourth beam is determined by the terminal based on an implementation of the terminal for retransmitting the first information.

In above embodiments, the beam for retransmitting the first information is provided, so that the first information is retransmitted through the beam. In this way, the TA can be accurately received, and in a subsequent cell handover process, handover may be performed quickly based on the TA of the candidate cell, thereby reducing the delay of the cell handover and improving the efficiency of the cell handover.

In combination with some embodiments of the first aspect, the method further includes: sending fourth information to the serving cell, and the fourth information indicates a first random access channel occasion (RO) for retransmitting the first information.

In above embodiments, the terminal synchronizes the first RO for retransmitting the first information to the serving cell, so that the serving cell and the terminal are able to align the window where the TA is sent, and the terminal is able to accurately receive the TA.

In combination with some embodiments of the first aspect, receiving the TA sent by the serving cell by using the second beam indicated by the second TCI state includes: receiving the TA sent by the serving cell by using the second beam within a first time window, the first time window is determined according to an RO indicated by third information, and the third information is configured to trigger the terminal to send the first information to the candidate cell.

In above embodiments, the terminal and the network device determine the window where the TA is sent based on the RO when the first information is initially transmitted, so that the terminal is able to accurately receive the TA based on the window.

In combination with some embodiments of the first aspect, the first TCI state includes at least one of: a downlink TCI state; or a joint TCI state. The joint TCI state indicates both a beam for uplink communication and a beam for downlink communication.

In above embodiments, multiple possible forms of TCI states are provided, so that in different scenarios, an appropriate beam is used to send the first information and an appropriate beams is used to receive the TA, which facilitates fast handover based on the TA of the candidate cell in a subsequent cell handover process, thereby reducing the delay of the cell handover, and improving the efficiency of the cell handover.

In combination with some embodiments of the first aspect, the second TCI state includes at least one of: a downlink TCI state; or a joint TCI state. The joint TCI state indicates both a beam for uplink communication and a beam for downlink communication.

In above embodiments, multiple possible forms of TCI states are provided, so that in different scenarios, an appropriate beam is used to send the first information and an appropriate beams is used to receive the TA, which facilitates fast handover based on the TA of the candidate cell in a subsequent cell handover process, thereby reducing the delay of the cell handover, and improving the efficiency of the cell handover.

According to a second aspect of embodiments of the present invention, a communication method is provided, which is performed by a serving cell and includes: sending a timing advance (TA) corresponding to a candidate cell to a terminal by using a first beam indicated by a first transmission configuration indication (TCI) state, and the TA is determined by the candidate cell according to first information sent by the terminal.

In above embodiments, the beam for receiving the TA sent by the serving cell is determined for the terminal, so that the terminal is capable of accurately receiving the TA, and in a subsequent cell handover process, handover may be performed quickly based on the TA of the candidate cell, reducing the delay of the cell handover and improving the efficiency of the cell handover.

In combination with some embodiments of the second aspect, the first TCI state includes at least one of: a TCI state for sending second information, where the second information is configured to trigger the terminal to send the first information to the candidate cell; a TCI state indicated by the serving cell for the terminal; or a TCI state indicated by the serving cell for a type1 physical downlink control channel (PDCCH).

In combination with some embodiments of the second aspect, the first TCI state includes: a TCI state indicated by the serving cell for the terminal, and a TCI state indicated by the serving cell for a type1 PDCCH; the TCI state indicated by the serving cell for the typel PDCCH is configured for sending the typel PDCCH, and the TCI state indicated by the serving cell for the terminal is configured for sending a physical downlink shared channel (PDSCH) scheduled by the type1 PDCCH.

In combination with some embodiments of the second aspect, the method further includes: sending the TA by using a second beam indicated by a second TCI state in a case where the terminal fails to receive the TA by using the first beam, and the first information for determining the TA is retransmitted by the terminal to the candidate cell.

In combination with some embodiments of the second aspect, the second TCI state includes at least one of: a TCI state for sending second information, where the second information is configured to trigger the terminal to send the first information to the candidate cell; a TCI state indicated by the serving cell for the terminal; or a TCI state indicated by the serving cell for a typel PDCCH.

In combination with some embodiments of the second aspect, the second TCI state includes: a TCI state indicated by the serving cell for the terminal, and a TCI state indicated by the serving cell for a type1 PDCCH; the TCI state indicated by the serving cell for the typel PDCCH is configured for sending the type1 PDCCH, and the TCI state indicated by the serving cell for the terminal is configured for sending a PDSCH scheduled by the typel PDCCH.

In combination with some embodiments of the second aspect, the first information is retransmitted by the terminal to the candidate cell by using a third beam indicated by third information, and the third information is configured to trigger the terminal to send the first information to the candidate cell.

In combination with some embodiments of the second aspect, the first information is retransmitted by the terminal to the candidate cell by using a fourth beam, and the fourth beam is determined by the terminal based on an implementation of the terminal for retransmitting the first information.

In combination with some embodiments of the second aspect, the method further includes: receiving fourth information, and the fourth information indicates a first random access channel occasion (RO) for retransmitting the first information.

In combination with some embodiments of the second aspect, sending the TA by using the second beam indicated by the second TCI state includes: sending the TA by using the second beam within a first time window, the first time window is determined according to an RO indicated by third information, and the third information is configured to trigger the terminal to send the first information to the candidate cell.

In combination with some embodiments of the second aspect, the first TCI state includes at least one of: a downlink TCI state; or a joint TCI state, and the joint TCI state indicates both a beam for uplink communication and a beam for downlink communication.

In combination with some embodiments of the second aspect, the second TCI state includes at least one of: a downlink TCI state; or a joint TCI state, and the joint TCI state indicates both a beam for uplink communication and a beam for downlink communication.

According to a third aspect of embodiments of the present invention, a communication method is provided, which includes that a terminal sends first information to a candidate cell, and the first information is configured for obtaining a timing advance (TA) corresponding to the candidate cell; the candidate cell sends the TA to a serving cell; and the serving cell sends the TA to the terminal by using a first beam indicated by a first transmission configuration indication (TCI) state.

In above embodiments, the beam for receiving the TA sent by the serving cell is determined for the terminal, so that the terminal is capable of accurately receiving the TA, and in a subsequent cell handover process, handover may be performed quickly based on the TA of the candidate cell, reducing the delay of the cell handover and improving the efficiency of the cell handover.

According to a fourth aspect of embodiments of the present invention, a terminal is provided, which includes a transceiver module and a processing module. The transceiver module is configured to send first information to a candidate cell, and the first information is configured for obtaining a timing advance (TA) corresponding to the candidate cell. The processing module is configured to determine a first beam indicated by a first transmission configuration indication (TCI) state, and the first beam is configured for receiving the TA corresponding to the candidate cell sent by a serving cell.

In above embodiments, the beam for receiving the TA sent by the serving cell is determined for the terminal, so that the terminal is capable of accurately receiving the TA, and in a subsequent cell handover process, handover may be performed quickly based on the TA of the candidate cell, reducing the delay of the cell handover and improving the efficiency of the cell handover.

According to a fifth aspect of embodiments of the present invention, a network device is provided, which includes a transceiver module, the transceiver module is configured to send a timing advance (TA) corresponding to a candidate cell to a terminal by using a first beam indicated by a first transmission configuration indication (TCI) state, and the TA is determined by the candidate cell according to first information sent by the terminal.

In above embodiments, the beam for receiving the TA sent by the serving cell is determined for the terminal, so that the terminal is capable of accurately receiving the TA, and in a subsequent cell handover process, handover may be performed quickly based on the TA of the candidate cell, reducing the delay of the cell handover and improving the efficiency of the cell handover.

According to a sixth aspect of embodiments of the present invention, a terminal is provided, which includes one or more processors, and is configured to perform the communication method as described in the first aspect and any items thereof.

In above embodiments, the beam for receiving the TA sent by the serving cell is determined for the terminal, so that the terminal is capable of accurately receiving the TA, and in a subsequent cell handover process, handover may be performed quickly based on the TA of the candidate cell, reducing the delay of the cell handover and improving the efficiency of the cell handover.

According to a seventh aspect of embodiments of the present invention, a network device is provided, which includes one or more processors, and is configured to perform the communication method as described in the second aspect and any items thereof.

In above embodiments, the beam for receiving the TA sent by the serving cell is determined for the terminal, so that the terminal is capable of accurately receiving the TA, and in a subsequent cell handover process, handover may be performed quickly based on the TA of the candidate cell, reducing the delay of the cell handover and improving the efficiency of the cell handover.

According to an eighth aspect of embodiments of the present invention, a communication system is provided, which includes: a terminal configured to perform the communication method as described in the first aspect and any items thereof, and a network device configured to perform the communication method as described in the second aspect and any items thereof.

In above embodiments, the beam for receiving the TA sent by the serving cell is determined for the terminal, so that the terminal is capable of accurately receiving the TA, and in a subsequent cell handover process, handover may be performed quickly based on the TA of the candidate cell, reducing the delay of the cell handover and improving the efficiency of the cell handover.

According to a ninth aspect of embodiments of the present invention, a storage medium is provided, which has stored therein instructions that, when run on a communication device, cause the communication device to perform the communication method as described in the first aspect and any items thereof or as described in the second aspect and any items thereof.

In above embodiments, the beam for receiving the TA sent by the serving cell is determined for the terminal, so that the terminal is capable of accurately receiving the TA, and in a subsequent cell handover process, handover may be performed quickly based on the TA of the candidate cell, reducing the delay of the cell handover and improving the efficiency of the cell handover.

According to a tenth aspect of embodiments of the present invention, embodiments of the present invention provide a program product that, when executed by a communication device, causes the communication device to perform the method as described in any optional implementation manner of the first aspect or the second aspect.

According to an eleventh aspect of embodiments of the present invention, embodiments of the present invention provide a computer program that, when run on a computer, causes the computer to perform the method as described in any optional implementation manner of the first aspect or the second aspect.

According to a twelfth aspect of embodiments of the present invention, embodiments of the present invention provide a chip or a chip system, which includes a processing circuit configured to perform the method as described in any optional implementation manner of the first aspect or the second aspect.

It is understandable that the terminal, the access network device, the first network element, other network elements, the core network device, the communication system, the storage medium, the program product, the computer program, the chip or the chip system involved in various embodiments of the present invention may be used to implement the method according to embodiments of the present invention. Therefore, for the achievable beneficial effects, reference may be made to those achieved by the corresponding method, which will not be repeated here.

Embodiments of the present invention provide a communication method, a terminal, a network device, and a storage medium. In some embodiments, terms like communication method, information processing method, communication method and so on are interchangeable, terms like communication device, information processing device, communication apparatus and so on are interchangeable, and terms like information processing system, communication system and so on are interchangeable.

Embodiments of the present invention are not exhaustive, but are examples of some embodiments, and are not intended to constitute a limitation on the scope of protection of the present invention. In the absence of contradiction, each step in a certain embodiment may be implemented as an independent embodiment, and individual steps may be arbitrarily combined. For example, a solution obtained after removing one or more steps from a certain embodiment may also be implemented as an independent embodiment, and steps in a certain embodiment may be arbitrarily exchanged in order. In addition, optional implementation manners in a certain embodiment may be arbitrarily combined. In addition, various embodiments may be arbitrarily combined, for example, some or all of the steps of different embodiments may be arbitrarily combined, and a certain embodiment may be arbitrarily combined with an optional implementation manner of other embodiments.

In various embodiments of the present invention, unless specified otherwise or there is a logical conflict, terms and/or descriptions among various embodiments are of consistency and may be referenced to each other, and technical features in different embodiments may be combined to form new embodiments based on their internal logical relationships.

Terms used in embodiments of the present invention are for the purpose of describing specific embodiments and are not intended to limit the present invention.

In embodiments of the present invention, unless specified otherwise, an element expressed in the singular form, such as expressed with words like "a", "an", "the", "described above", "said", "aforementioned", "this", etc., may mean "one and only one", or mean "one or more", "at least one", etc. For example, where articles such as "a", "an", "the" used in English are used in translation, the noun after the article may be understood as a singular expression or a plural expression.

In embodiments of the present invention, "a plurality of' refers to two or more.

In some embodiments, phrases like "at least one", "one or more", "a plurality of", "multiple", etc. are interchangeable.

In some embodiments, expressions such as "at least one of A or B", "A and/or B", "A in a case, B in another case", "A in response to a case, B in response to another case", etc., may include the following technical solutions depending on circumstances: in some embodiments, A (A is executed independently of B); in some embodiments, B (B is executed independently of A); in some embodiments, execution is selected from A and B (A and B are selectively executed); in some embodiments, A and B (both A and B are executed). Similar principles apply when there are more branches, such as A, B, C, etc.

In some embodiments, the expression like "A or B" may include the following technical solutions depending on circumstances: in some embodiments, A (A is executed independently of B); in some embodiments, B (B is executed independently of A); in some embodiments, execution is selected from A and B (A and B are selectively executed). Similar principles apply when there are more branches, such as A, B, C, etc.

The prefixes such as "first" and "second" in embodiments of the present invention are used to distinguish different objects described, and do not constitute restrictions on position, order, priority, quantity or content of the described objects. The statement for the described objects refers to the description in the context of the claims or embodiments, and the use of prefixes should not bring unnecessary restrictions. For example, if the described objects are "fields", such as "first field" and "second field", the ordinal numbers, i.e., "first" and "second", before these "fields" do not limit positions or order of these "fields", and the "first" and "second" do not limit whether the "fields" they define are in the same message, nor do they limit the order of the "first field" and the "second field". For another example, if the described objects are "levels", such as "first level" and "second level", the ordinal numbers before these "levels" do not limit the priority between these "levels". For another example, the number of the described objects is not limited by the ordinal number, the number of the described objects may be one or more. Taking "first apparatus" as an example, the number of the "apparatus" may be one or more. In addition, different prefixes may be used to define the same object or different objects. For example, if the described object is "apparatus", then "first apparatus" and "second apparatus" may be the same apparatus or different apparatuses, and their types may be the same or different. For another example, if the described object is "information", then "first information" and "second information" may be the same information or different information, and their contents may be the same or different.

In some embodiments, "comprising A", "including A", "indicating A", and "carrying A" may be interpreted as directly carrying A or indirectly indicating A.

In some embodiments, phrases such as "in response to...", "in response to determining...", "in case of...", "upon...", "when...", "if..." or the like may be used interchangeably.

In some embodiments, terms such as "greater than", "greater than or equal to", "not less than", "more than", "more than or equal to", "not less than", "higher than", "higher than or equal to", "not lower than", and "above" are interchangeable, and terms such as "smaller than", "smaller than or equal to", "not greater than", "less than", "less than or equal to", "no more than", "lower than", "lower than or equal to", "not higher than", and "below" are interchangeable.

In some embodiments, apparatus and device may be interpreted as physical or virtual, with their names not limited to those recorded in embodiments, and in some cases may be understood as "equipment", "device", "circuit", "network element", "node", "function", "unit", "section", "system", "network", "chip", "chip system", "entity", "body", and so on.

In some embodiments, the term "network" may be interpreted as devices contained within the network, e.g., access network device, core network device, etc.

In some embodiments, "access network device (AN device)" may also be referred to as "radio access network device (RAN device)", "base station (BS)", "radio base station", or "fixed station", and may also be understood in some embodiments as "node", "access point", "transmission point (TP)", "reception point (RP)", "transmission/reception point (TRP)", "panel (panel)", "antenna panel", "antenna array", "cell", "macro cell", "small cell", "femto cell", "pico cell", "sector", "cell group", "serving cell", "carrier", "component carrier", "bandwidth part (BWP)" or the like.

In some embodiments, "terminal" or "terminal device" may be referred to as "user equipment (UE)", "user terminal" "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client or the like.

In some embodiments, acquisition of data, information, etc. may comply with the laws and regulations of the country where the activity takes place.

In some embodiments, data, information, etc. may be obtained with the user's consent.

In addition, each element, each row, or each column in the table of embodiments of the present invention may be implemented as an independent embodiment, and the combination of any element, any row, and/or any column may also be implemented as an independent embodiment.

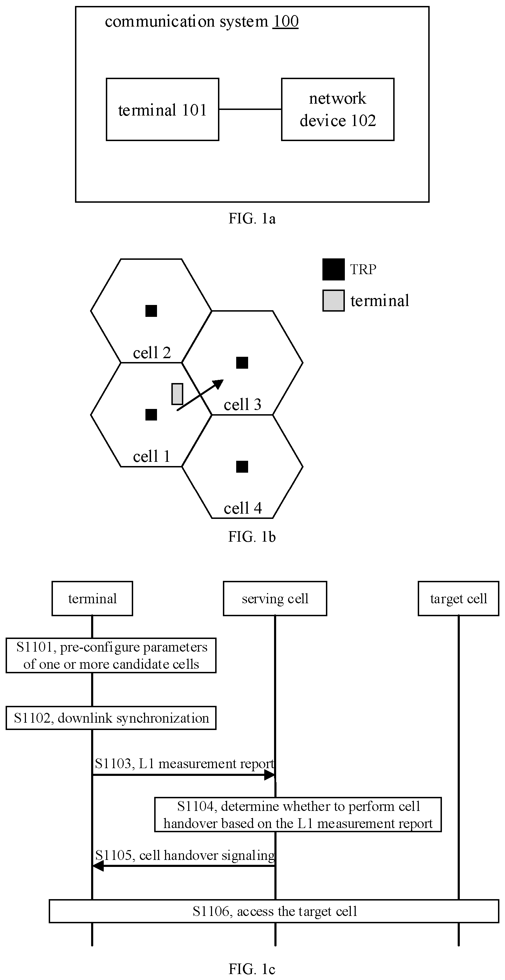

FIG. 1a is a schematic diagram showing an architecture of a communication system according to embodiments of the present invention.

As shown in FIG. 1a, the communication system 100 includes a terminal 101 and a network device 102.

In some embodiments, the terminal 101 includes, for example, at least one of a mobile phone, a wearable device, an Internet of Things device, a car with a communication function, a smart car, a tablet computer (Pad), a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in a smart home, but is not limited thereto.

In some embodiments, the network device 102 may include at least one of an access network device or a core network device.

In some embodiments, the access network device is for example a node or device that connects a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), or a mobile switching center in a 5G communication system, a base station, an open base station (Open RAN), or a cloud base station (Cloud RAN) in a 6G communication system, a base station in other communication systems, or an access node in a Wi-Fi system, but is not limited thereto.

In some embodiments, the technical solutions of the present invention are applicable to the Open RAN architecture. In this case, interfaces between access network devices or within an access network device involved in embodiments of the present invention may be internal interfaces of the Open RAN, and the processes and information exchange between these internal interfaces can be implemented through software or programs.

In some embodiments, the access network device may be composed of a central unit (CU) and distributed units (DUs), where the CU may also be referred to as a control unit. The CU-DU structure allows to split protocol layers of the access network device, functions of some protocol layers are set in the CU for centralized control, functions of some or all of the remaining protocol layers are distributed in DUs, and the DUs are centrally controlled by the CU, but the present invention is not limited thereto.

In some embodiments, the core network device may be a single device including one or more network elements, or may include a plurality of devices or a group of devices, each including all or part of the aforementioned one or more network elements. The network elements may be virtual or physical. The core network includes, for example, at least one of evolved packet core (EPC), 5G core network (5GCN), or next generation core (NGC).

It may be understood that the communication system described in embodiments of the present invention is for the purpose of more clearly illustrating the technical solutions of embodiments of the present invention, and does not constitute a limitation on the technical solutions proposed in embodiments of the present invention. A person of ordinary skill in the art knows that with the evolution of the system architecture and the emergence of new service scenarios, the technical solutions proposed in embodiments of the present invention are also applicable to similar technical problems.

The following embodiments of the present invention may be applied to the communication system or some of entities shown in FIG. 1a, but are not limited thereto. The entities shown in FIG. 1a are examples, and the communication system may include all or part of the entities in FIG. 1a, or may include other entities not shown in FIG. 1a, and the number and form of each kind of entity are arbitrary, each entity may be a physical entity or a virtual entity, and the connection relationship among the entities is an example, and these entities may be connected or disconnected with each other, and the connection may be in any manner, either a direct connection or an indirect connection, or either a wired connection or a wireless connection.

Various embodiments of the present invention may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, next-generation systems expanded based thereon, etc. In addition, multiple systems may also be combined (for example, a combination of LTE or LTE-A and 5G) for application.

In embodiments of the present invention, in a scenario of L1/L2 based inter-cell mobility as shown in FIG. 1b, it can be seen from FIG. 1b that a terminal moves among cells, for example, the terminal moves from cell 1 to cell 3 in a direction as indicated by the arrow. It is understandable that in a corresponding cell, the terminal is able to communicate with a network device of the cell through a transmission/reception point (TRP) of the cell. In the scenario shown in FIG. 1b, the network device may maintain a plurality of candidate cells for the terminal. With the movement of the terminal, when cell handover is required, a cell may be selected from the plurality of candidate cells as a target cell, and the terminal may switch to this target cell.

In some embodiments, to reduce a handover delay and complete the handover as soon as possible, unlike traditional cell handover, in this example, radio resource control layer (RRC) parameters of each candidate cell may be pre-configured to the terminal. The network device may determine whether to perform the cell handover according to a measurement result of L1 measurement performed by the terminal. When the network device determines that the cell handover is required, the network device may trigger the terminal to switch to the target cell via a dynamic handover signaling.

FIG. 1c is a schematic diagram showing signaling interaction for cell handover according to an example embodiment. FIG. 1c shows the process of the cell handover of a terminal, which may include the following steps.

In step S1101, parameters of one or more candidate cells are pre-configured for the terminal.

In some embodiments, a network device may pre-configure parameters of one or more candidate cells for the terminal.

For example, a network device of a serving cell may pre-configure the parameters of the one or more candidate cells for the terminal according to a radio resource management (RRM) measurement result. The RRM measurement result may also be referred to as an L3 measurement result in some cases. It is understandable that since the serving cell has established a connection with the terminal and provides services for the terminal, the network device of the serving cell may pre-configure the parameters of one or more candidate cells for the terminal, and since the candidate cell does not established a connection with the terminal, it cannot provide services for the terminal, and thus cannot configure the corresponding parameters for the terminal.

For example, an RRC parameter of each candidate cell is sent to the terminal in advance and stored in the terminal.

In some embodiments, based on a part of the pre-configured parameters of the one or more candidate cells, such as beam measurement reference signals of individual candidate cells, the terminal may perform beam measurement on at least one beam in a candidate cell to obtain a beam measurement result corresponding to the candidate cell. It is understandable that the beam measurement is usually performed on a plurality of beams in a candidate cell. In a case where candidate cell parameters of a plurality of candidate cells are pre-configured, the beam measurement may be performed on the plurality of different candidate cells by using respective beam measurement reference signals of the plurality of candidate cells to obtain respective beam measurement results of the plurality of candidate cells.

In step S1102, the terminal performs downlink synchronization.

In some embodiments, the terminal may receive a synchronization signal/physical broadcast channel block (SSB) of a candidate cell to maintain downlink synchronization with the candidate cell.

In step S1103, the terminal reports an L1 measurement report to the network device of the serving cell.

In some embodiments, the terminal may report a measurement report of the beam measurement result(s) obtained by the terminal through measurement to the network device of the serving cell. The beam measurement result may also be referred to as an L1 measurement result. It is understood that the serving cell may be a cell where the terminal is located before the cell handover.

In some embodiments, the terminal performs the beam measurement on the candidate cell. For example, the terminal measures an L1-reference signal receiving power (RSRP), L1-signal to interference plus noise ratio (SINR), etc.

In step S1104, the network device of the serving cell determines whether to perform cell handover based on the L1 measurement report.

In some embodiments, in a case where the network device of the serving cell receives the L1 measurement report sent by the terminal, the network device of the serving cell may determine whether the terminal needs to perform the cell handover based on the L1 measurement report.

For example, the network device of the serving cell may determine that the terminal does not need to perform the cell handover.

For another example, the network device of the serving cell may determine that the terminal needs to perform the cell handover. Of course, the network device of the serving cell may further determine which new cell the terminal is to be switched to. For example, the cell after the cell handover of the terminal may be referred to as a target cell. That is, the target cell is a serving cell after the cell handover of the terminal.

It is understandable that the target cell may be a candidate cell selected by the network device of the serving cell from the one or more candidate cells.

In step S1105, the network device of the serving cell sends a cell handover signaling to the terminal.

In some embodiments, in a case where the network device of the serving cell determines that the terminal needs to perform the cell handover, the network device of the serving cell may send the cell handover signaling to the terminal. The cell handover signaling may be used to instruct the terminal to perform the cell handover.

In some embodiments, the cell handover signaling may also indicate the target cell.

In step S1106, the terminal accesses the target cell.

In some embodiments, in a case where the terminal receives the cell handover signaling, the terminal may perform random access to access the target cell, thereby completing the cell handover of the terminal.

It is understandable that in the process shown in FIG. 1c, the terminal needs to perform L1 measurement on each candidate cell and report the measurement result(s) to the network device of the serving cell, so that the network device of the serving cell may determine whether the terminal needs to perform the cell handover based on the measurement result(s).

It is understandable that the above FIG. 1c only provides a flowchart of a possible LTM process, which of course may also include other steps or may be performed in other possible sequence, which will not be limited in the present invention.

In some embodiments, in order to reduce the delay caused by the cell handover of the terminal, it is considered to perform TA measurement of the candidate cell in advance. After the terminal receives the handover signaling, it is no longer necessary to perform random access to access the target cell, so that the handover may be completed as soon as possible. For example, when performing the TA measurement, the terminal is triggered by the serving cell to initiate random access (RA) to the one or more candidate cells to measure the TA of the terminal to each candidate cell. Each candidate cell measures the TA according to a preamble sequence sent by the terminal, and feeds back the measured TA to the serving cell. The serving cell may send the TA measured by the candidate cell to the terminal via a random access response (RAR).

It is understandable that in various embodiments of the present invention, the serving cell may also be referred to as a source cell, which means a cell that is currently connected to the terminal and provides communication services for the terminal.

In some embodiments, generally, in a conventional random access process, after a terminal sends a preamble sequence to a cell, an RAR is also fed back to the terminal by the cell, so a receiving beam for the RAR may be the same as a transmitting beam for the preamble sequence.

In some embodiments, if the terminal fails to receive the RAR, the terminal may retransmit the preamble sequence, which may also be referred to as retransmission of the random access, and a beam for the retransmission may be changed. That is, the terminal may reselect a suitable transmission beam and random access channel occasion (RO) based on the measurement of synchronization signal/physical broadcast channel block (SSB).

In some embodiments, for a random access process initiated to a candidate cell for TA measurement in the LTM scenario, the RAR will be sent from the serving cell. That is, the terminal needs to receive the RAR from the serving cell. Then, the traditional method for determining an RAR beam will no longer be applicable.

In some embodiments, there is currently no consensus on whether the user is allowed to perform beam reselection, if receiving the RAR from the serving cell fails. For a case where the user is allowed to perform the beam reselection, there is currently no consensus on how to ensure that the terminal can successfully receive the RAR from the serving cell.

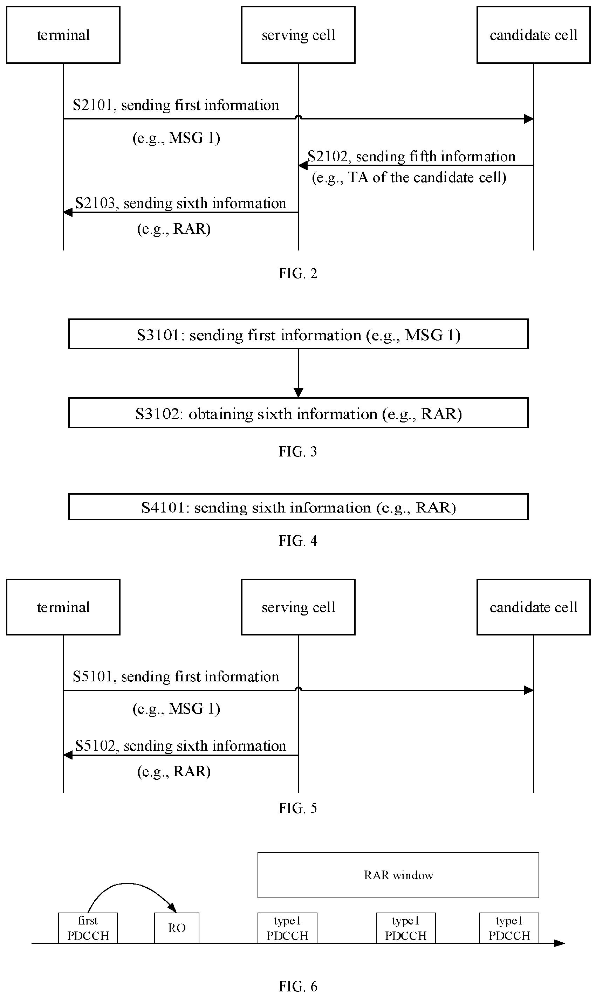

FIG. 2 is a schematic interactive diagram of a communication method according to embodiments of the present invention. As shown in FIG. 2, embodiments of the present invention relate to a communication method, which is used in a communication system 100, and the method includes the following steps.

In step S2101, a terminal sends first information to a candidate cell.

In some embodiments, the terminal sends the first information to the candidate cell.

In some embodiments, the candidate cell receives the first information sent by the terminal.

In some embodiments, the name of the information is not limited to that recorded in embodiments, and terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", and "chip" are interchangeable.

In some embodiments, terms such as "obtain", "acquire", "get", "receive", "transmission", "bidirectional transmission", "send and/or receive" are interchangeable, and may be interpreted as receiving from other entity, obtaining from a protocol, obtaining from a high layer, obtaining by self-processing, autonomous implementation, etc.

In some embodiments, terms such as "send", "transmit", "report", "issue", "transmission", "bidirectional transmission", "send and/or receive" are interchangeable.

It is understandable that the candidate cell mentioned in various embodiments of the present invention may be considered as a network device corresponding to the candidate cell.

In some embodiments, the network device corresponding to the candidate cell is the network device 102 mentioned above.

In some embodiments, the first information is configured for obtaining a TA corresponding to the candidate cell.

In some embodiments, the first information may be referred to as a random access message (MSG) 1.

In some embodiments, the first information is a preamble sequence.

In some embodiments, the first information may also be called message 1, TA acquisition information, random access information, etc. The present invention does not limit the name of the first information.

In some embodiments, a serving cell sends second information to the terminal.

In some embodiments, the terminal receives the second information sent by the serving cell.

In some embodiments, the second information is configured to trigger the terminal to send the first information to the candidate cell.

In some embodiments, the second information is downlink control information (DCI).

For example, the second information is carried on a physical downlink control channel (PDCCH). The second information may also be referred to as a PDCCH order.

It is understandable that the PDCCH order mentioned above is sent based on an implementation of the serving cell. That is, the PDCCH order may be sent by the serving cell at any time to trigger the terminal to send the preamble sequence to the candidate cell for obtaining the TA of the candidate cell.

In some embodiments, the second information may also be called RACH activation information, RACH trigger information, TA acquisition information, etc., and the present invention does not limit the name of the second information.

In some embodiments, after receiving the second information sent by the serving cell, the terminal determines to send the first information to the candidate cell for obtaining the TA corresponding to the candidate cell.

In some embodiments, the terminal uses a beam indicated by the second information to send the first information to the candidate cell.

For example, the terminal uses a beam indicated by the PDCCH order to send the first information to the candidate cell.

In some embodiments, a beam may also be referred to as a transmission configuration indication (TCI) state, spatial relation information (spatialrelationinfo) or a spatial filter.

In some embodiments, a network device corresponding to the serving cell is the network device 102 mentioned above.

In some embodiments, sending information by a terminal to a network device is considered as uplink communication.

In some embodiments, terms such as "uplink", "up link", "physical uplink", etc. are interchangeable.

In step S2102, the candidate cell sends fifth information to the serving cell.

In some embodiments, the candidate cell sends the fifth information to the serving cell.

In some embodiments, the serving cell receives the fifth information sent by the candidate cell.

In some embodiments, the fifth information indicates a TA value measured by the candidate cell.

In some embodiments, after the candidate cell measures the TA based on the first information sent by the terminal 101, the candidate cell sends the fifth information indicating the TA to the serving cell, so that the serving cell indicates the TA value measured by the candidate cell to the terminal.

For example, after receiving the preamble sequence sent by the terminal 101, the candidate cell obtains the TA corresponding to the candidate cell by measurement. The candidate cell sends the fifth information indicating the TA to the serving cell, so that the serving cell indicates the TA value measured by the candidate cell to the terminal based on the fifth information.

In step S2103, the serving cell sends sixth information to the terminal.

In some embodiments, the serving cell sends the sixth information to the terminal.

In some embodiments, the terminal receives the sixth information sent by the serving cell.

In some embodiments, sending information by a network device to a terminal is considered as downlink communication.

In some embodiments, terms such as "downlink", "down link", "physical downlink", etc., are interchangeable.

In some embodiments, the sixth information includes the TA corresponding to the candidate cell.

In some embodiments, the sixth information may be an RAR.

In some embodiments, the sixth information may also be called TA indication information, TA feedback information, RAR message, etc., and the present invention does not limit the name of the sixth information.

In some embodiments, the terminal determines a first beam indicated by a first TCI state, and the first beam is used to receive the sixth information sent by the serving cell.

In some embodiments, the first TCI state is determined to be a TCI state for receiving the second information.

For example, the first TCI state is a TCI state for receiving the PDCCH order.

In some embodiments, the first TCI state is determined to be a joint TCI state or a downlink TCI state indicated by the serving cell for the terminal.

In some embodiments, the joint TCI state or the downlink TCI state indicated by the serving cell for the terminal is configured by the serving cell for the terminal before the serving cell sends the PDCCH order to the terminal. Of course, in some examples, after the serving cell sends the PDCCH order to the terminal, the serving cell may reconfigure a new TCI state for the terminal, that is, the joint TCI state or the downlink TCI state indicated by the serving cell for the terminal is configured after the serving cell sends the PDCCH order to the terminal.

In some embodiments, the first TCI state is determined to be a TCI state indicated by the serving cell for a type1 PDCCH.

In some embodiments, the first TCI state includes a joint TCI state or downlink TCI state indicated by the serving cell for the terminal, and a TCI state indicated by the serving cell for a type1 PDCCH. The TCI state indicated by the serving cell for the typel PDCCH is used for the terminal to receive the typel PDCCH; and the joint TCI state or the downlink TCI state indicated by the serving cell for the terminal is used for the terminal to receive a physical downlink shared channel (PDSCH) scheduled by the type1 PDCCH.

In some embodiments, the serving cell sends the RAR on the PDSCH scheduled by the type1 PDCCH, and the terminal receives the RAR on the PDSCH scheduled by the typel PDCCH.

In some embodiments, terms such as "PDSCH", "DL data", etc., are interchangeable.

In some embodiments, in a case where the terminal retransmits the first information, the terminal uses a second beam indicated by a second TCI state, and the second beam is used for receiving the sixth information sent by the serving cell.

It is understandable that the first beam is a beam used by the terminal to receive the sixth information in the case where the terminal initially transmits the first information, and the second beam is a beam used by the terminal to receive the sixth information in the case where the terminal retransmits the first information.

In some embodiments, the second TCI state is determined to be a TCI state for receiving the second information.

For example, the second TCI state is the TCI state for receiving the PDCCH order.

In some embodiments, the second TCI state is determined to be a joint TCI state or a downlink TCI state indicated by the serving cell for the terminal.

In some embodiments, the second TCI state is determined to be a TCI state indicated by the serving cell for a type1 PDCCH.

In some embodiments, the second TCI state includes a TCI state indicated by the serving cell for the terminal and a TCI state indicated by the serving cell for a typel PDCCH. The TCI state indicated by the serving cell for the typel PDCCH is used for the terminal to receive the typel PDCCH, and the TCI state indicated by the serving cell for the terminal is used for the terminal to receive a PDSCH scheduled by the type1 PDCCH.

In some embodiments, in the case where the terminal retransmits the first information, the terminal uses the beam indicated by the second TCI state to receive, within a first time window, the sixth information sent by the serving cell. The first time window is determined based on an RO indicated by the third information.

For example, in the case where the terminal retransmits the first information, fourth information may be sent or not. That is, the terminal may or may not inform the serving cell of a first RO newly determined. In either case, an RO indicated by the PDCCH order is used to determine an RAR window. In this way, it is ensured that the RAR window of the terminal is aligned with that of the serving cell, avoiding the situation where the terminal fails to receive the RAR sent by the serving cell due to misalignment of the RAR windows of the terminal and the serving cell.

In some embodiments, the terminal does not send the fourth information to the serving cell, and the RAR window is determined based on the RO indicated by the PDCCH order.

It is understandable that in various embodiments of the present invention, the terminal receives the sixth information sent by the serving cell, including receiving the typel PDCCH within the RAR window and receiving the PDSCH scheduled by the typel PDCCH. The sixth information is carried in the PDSCH. Of course, the PDSCH scheduled by the typel PDCCH may be within the RAR window or outside the RAR window, which is not limited in the present invention. However, in various embodiments of the present invention, the explanative description is made with reference to examples where the sixth information is received within the RAR window, which may be understood as having the same meaning as receiving the typel PDCCH within the RAR window and receiving the PDSCH scheduled by the typel PDCCH as described above.

In some embodiments, the first TCI state may include one TCI state or two TCI states. The second TCI state may include one TCI state or two TCI states. If one TCI state is included, a beam indicated by the one TCI state is used to receive the typel PDCCH within the RAR window, and then the beam indicated by the one TCI state is used to receive the PDSCH scheduled by the typel PDCCH. If two TCI states are included, a beam indicated by one of the two TCI states is used to receive the type1 PDCCH within the RAR window, and then a beam indicated by the other one of the two TCI states is used to receive the PDSCH scheduled by the typel PDCCH. For example, a first TCI state of the two TCI states is used to receive the typel PDCCH within the RAR window; and then a second TCI state of the two TCI states is used to receive the PDSCH scheduled by the typel PDCCH.

In some embodiments, in a case where the terminal does not receive the sixth information sent by the serving cell after the terminal sends the first information, the terminal retransmits the first information to the candidate cell.

In some embodiments, the terminal retransmits the first information to the candidate cell.

In some embodiments, the candidate cell receives the first information retransmitted by the terminal.

In some embodiments, in a case where the terminal does not receive the RAR sent by the serving cell, the terminal retransmits the first information to the candidate cell.

In some embodiments, a beam which is used by the terminal to retransmit the first information i.e., a third beam, is the same as the beam which is used by the terminal to transmit the first information for the first time. For example, the third beam is determined by an SSB index indicated in the third information. The third information is configured to trigger the terminal to send the first information to the candidate cell.

In some embodiments, the third information and the second information may be the same information, for example, the PDCCH order.

In some embodiments, the terminal uses a fourth beam to retransmit the first information to the candidate cell. The fourth beam is selected by the terminal on its own. For example, the terminal selects the fourth beam based on an implementation of the terminal. For example, the terminal selects the fourth beam based on such as a current state of the terminal, a preset rule, a power of the terminal or other factors, which are not limited in the present invention.

For example, the terminal reselects a more appropriate beam, i.e., the fourth beam, according to the beam measurement result. The terminal retransmits the first information by using the fourth beam.

In some embodiments, in a case where the terminal reselects the beam for retransmitting the first information, the terminal sends the fourth information to the serving cell.

In some embodiments, the terminal sends the fourth information to the serving cell.

In some embodiments, the serving cell receives the fourth information sent by the terminal.

In some embodiments, the fourth information indicates a first RO used for retransmitting the first information.

It is understandable that, in the case where the terminal retransmits the first information, the terminal may reselect the beam for retransmitting the first information. In order to allow the candidate cell to successfully receive the preamble sequence, the terminal needs to send the preamble sequence in the RO corresponding to the reselected transmission beam, i.e., the first RO. However, considering that the first RO is re-determined by the terminal, and the serving cell is unaware of the first RO, so the terminal sends the fourth information to the serving cell to indicate the re-determined first RO.

In some examples, the terminal and the serving cell determine the RAR window for sending and receiving the RAR according to a position of the RO. Therefore, by synchronizing the first RO, it is ensured that the RAR window determined by the terminal is aligned with the RAR window determined by the serving cell, avoiding the situation where the terminal fails to receive the RAR sent by the serving cell due to misalignment of the RAR windows of the terminal and the serving cell.

It is understood that the present invention does not limit the order of sending the fourth information by the terminal and retransmitting the first information by the terminal. For example, the terminal first sends the fourth information to the serving cell and then retransmits the first information to the candidate cell; or the terminal first retransmits the first information to the candidate cell and then sends the fourth information to the serving cell; or the terminal simultaneously sends the fourth information to the serving cell and retransmits the first information to the candidate cell.

In some embodiments, the terminal first sends the fourth information to the serving cell, and then retransmits the first information to the candidate cell.

The perception communication method involved in embodiments of the present invention may include at least one of steps S2101 to S2103. For example, steps S2101+S2102+S2103 may be implemented as an independent embodiment, but the present invention is not limited thereto.

In some embodiments, reference may be made to other optional implementations recorded before or after the description corresponding to FIG. 2.

FIG. 3 is a schematic flowchart of a communication method according to an example embodiment. As shown in FIG. 3, embodiments of the present invention relate to a communication method, which is performed by a terminal, and includes the following steps:
In step S3101, first information is sent.

For optional implementation manners of the step S3101, reference may be made to the optional implementation manners of the step S2101 in FIG. 2 and other related parts in embodiments involved in FIG. 2, which will not be described in detail here.

In step S3102, sixth information is obtained.

For optional implementation manners of the step S3102, reference may be made to the optional implementation manners of the step S2103 in FIG. 2 and other related parts in embodiments involved in FIG. 2, which will not be described in detail here.

In some embodiments, the step S3102 is omitted, and the terminal autonomously implements the function indicated by the second information, or the above function is default.

In combination with some embodiments of the first aspect, the first TCI state includes at least one of: a TCI state for receiving second information, where the second information is configured to trigger the terminal to send the first information to the candidate cell; a TCI state indicated by the serving cell for the terminal; or a TCI state indicated by the serving cell for a typel physical downlink control channel (PDCCH).

In combination with some embodiments of the first aspect, the first TCI state includes: a TCI state indicated by the serving cell for the terminal, and a TCI state indicated by the serving cell for a typel PDCCH, the TCI state indicated by the serving cell for the type1 PDCCH is configured for receiving the typel PDCCH, and the TCI state indicated by the serving cell for the terminal is configured for receiving a physical downlink shared channel (PDSCH) scheduled by the typel PDCCH.

In combination with some embodiments of the first aspect, the method further includes: retransmitting the first information to the candidate cell, in a case where the terminal fails to receive the TA by using the first beam.

In combination with some embodiments of the first aspect, the method further includes: receiving the TA sent by the serving cell by using a second beam indicated by a second TCI state.

In combination with some embodiments of the first aspect, the second TCI state includes at least one of: a TCI state for receiving second information, where the second information is configured to trigger the terminal to send the first information to the candidate cell; a TCI state indicated by the serving cell for the terminal; or a TCI state indicated by the serving cell for a typel PDCCH.

In combination with some embodiments of the first aspect, the second TCI state includes: a TCI state indicated by the serving cell for the terminal, and a TCI state indicated by the serving cell for a typel PDCCH; the TCI state indicated by the serving cell for the typel PDCCH is configured for receiving the typel PDCCH, and the TCI state indicated by the serving cell for the terminal is configured for receiving a PDSCH scheduled by the typel PDCCH.

In combination with some embodiments of the first aspect, retransmitting the first information to the candidate cell includes: retransmitting the first information to the candidate cell by using a third beam indicated by third information, and the third information is configured to trigger the terminal to send the first information to the candidate cell.

In combination with some embodiments of the first aspect, retransmitting the first information to the candidate cell includes: retransmitting the first information to the candidate cell by using a fourth beam, and the fourth beam is determined by the terminal based on an implementation of the terminal for retransmitting the first information.

In combination with some embodiments of the first aspect, the method further includes: sending fourth information to the serving cell, and the fourth information indicates a first random access channel occasion (RO) for retransmitting the first information.

In combination with some embodiments of the first aspect, receiving the TA sent by the serving cell by using the second beam indicated by the second TCI state includes: receiving the TA sent by the serving cell by using the second beam within a first time window, the first time window is determined according to an RO indicated by third information, and the third information is configured to trigger the terminal to send the first information to the candidate cell.

In combination with some embodiments of the first aspect, the first TCI state includes at least one of: a downlink TCI state; or a joint TCI state. The joint TCI state indicates both a beam for uplink communication and a beam for downlink communication.

In combination with some embodiments of the first aspect, the second TCI state includes at least one of: a downlink TCI state; or a joint TCI state. The joint TCI state indicates both a beam for uplink communication and a beam for downlink communication.

FIG. 4 is a schematic flowchart of another communication method according to an example embodiment. As shown in FIG. 4, embodiments of the present invention relate to a communication method, which is performed by a serving cell, and includes a following step.

In step S4101, sixth information is sent.

For optional implementation manners of the step S4101, reference may be made to the optional implementation manners of the step S2103 in FIG. 2 and other related parts in embodiments involved in FIG. 2, which will not be described in detail here.

In combination with some embodiments of the second aspect, the first TCI state includes at least one of: a TCI state for sending second information, where the second information is configured to trigger the terminal to send the first information to the candidate cell; a TCI state indicated by the serving cell for the terminal; or a TCI state indicated by the serving cell for a typel physical downlink control channel (PDCCH).

In combination with some embodiments of the second aspect, the first TCI state includes: a TCI state indicated by the serving cell for the terminal, and a TCI state indicated by the serving cell for a type1 PDCCH; the TCI state indicated by the serving cell for the typel PDCCH is configured for sending the typel PDCCH, and the TCI state indicated by the serving cell for the terminal is configured for sending a physical downlink shared channel (PDSCH) scheduled by the type1 PDCCH.

In combination with some embodiments of the second aspect, the method further includes: sending the TA by using a second beam indicated by a second TCI state in a case where the terminal fails to receive the TA by using the first beam, and the first information for determining the TA is retransmitted by the terminal to the candidate cell.

In combination with some embodiments of the second aspect, the second TCI state includes at least one of: a TCI state for sending second information, where the second information is configured to trigger the terminal to send the first information to the candidate cell; a TCI state indicated by the serving cell for the terminal; or a TCI state indicated by the serving cell for a typel PDCCH.

In combination with some embodiments of the second aspect, the second TCI state includes: a TCI state indicated by the serving cell for the terminal, and a TCI state indicated by the serving cell for a type1 PDCCH; the TCI state indicated by the serving cell for the typel PDCCH is configured for sending the type1 PDCCH, and the TCI state indicated by the serving cell for the terminal is configured for sending a PDSCH scheduled by the typel PDCCH.

In combination with some embodiments of the second aspect, the first information is retransmitted by the terminal to the candidate cell by using a third beam indicated by third information, and the third information is configured to trigger the terminal to send the first information to the candidate cell.

In combination with some embodiments of the second aspect, the first information is retransmitted by the terminal to the candidate cell by using a fourth beam, and the fourth beam is determined by the terminal based on an implementation of the terminal for retransmitting the first information.

In combination with some embodiments of the second aspect, the method further includes: receiving fourth information, and the fourth information indicates a first random access channel occasion (RO) for retransmitting the first information.

In combination with some embodiments of the second aspect, sending the TA by using the second beam indicated by the second TCI state includes: sending the TA by using the second beam within a first time window, the first time window is determined according to an RO indicated by third information, and the third information is configured to trigger the terminal to send the first information to the candidate cell.

In combination with some embodiments of the second aspect, the first TCI state includes at least one of: a downlink TCI state; or a joint TCI state, and the joint TCI state indicates both a beam for uplink communication and a beam for downlink communication.

In combination with some embodiments of the second aspect, the second TCI state includes at least one of: a downlink TCI state; or a joint TCI state, and the joint TCI state indicates both a beam for uplink communication and a beam for downlink communication.

FIG. 5 is a schematic flowchart of another communication method according to an example embodiment. As shown in FIG. 5, embodiments of the present invention relate to a communication method, and the method includes the following steps.

In step S5101, a terminal sends first information to a candidate cell.

For optional implementation manners of the step S5101, reference may be made to the optional implementation manners of the step S2101 in FIG. 2, the optional implementation manners of the step S3101 in FIG. 3, other related parts in embodiments involved in FIG. 2, and other related parts in embodiments involved in FIG. 3, which will not be repeated here.

In step S5102, a serving cell sends sixth information to the terminal.

For optional implementation manners of the step S5102, reference may be made to the optional implementation manners of the step S2103 in FIG. 2, the optional implementation manners of the step S3102 in FIG. 3, the optional implementation manners of the step S4101 in FIG. 4, other related parts in embodiments involved in FIG. 2, other related parts in embodiments involved in FIG. 3, and other related parts in embodiments involved in FIG. 4, which will not be repeated here.

In the following, the present invention will describe the above solutions with reference to more detailed embodiments.

In some embodiments, the beam for receiving the RAR is determined by at least one of the following manners.

In some embodiments, manner 1: the same beam as that for receiving the PDCCH order that triggers the RACH is used.

For example, as shown in FIG. 6, the PDCCH order received by the terminal on a first PDCCH triggers the RACH in a corresponding RO to obtain the TA of the candidate cell, and the terminal receives the RAR sent by the serving cell via the typel PDCCH within the RAR window.

In some embodiments, manner 2: the beam is determined according to the joint TCI state/downlink TCI state indicated by the current serving cell to the terminal.

In some embodiments, manner 3: the beam for receiving the RAR is determined according to the TCI state specifically indicated for the typel PDCCH.

In some embodiments, the beam for the typel PDCCH is determined by this specific manner, but the beam for PDSCH carrying the RAR is determined by manner 2.

In some embodiments, the beam for the typel PDCCH and the beam for transmitting PDSCH carrying the RAR are both determined by this manner.

In some embodiments, for initial transmission of the RACH, any one of the above three manners may be used. For retransmission of the RACH, a certain one of the above manners may be used, which may be the same as or different from that used for the initial transmission of the RACH.

For example, for initial transmission of the RACH, the beam for receiving the RAR is determined by manner 1; for retransmission of the RACH, the transmission beam is determined by manner 2 or manner 3.

In some embodiments, the beam for RAR retransmission is determined by at least one of the following manners.

In some embodiments, manner 1: the beam indicated in the PDCCH order for initial transmission is still used.

In some embodiments, manner 2: the terminal reselects the beam for sending the preamble to the candidate cell on its own.

In this case, since the terminal reselects the beam and the corresponding RO resource, but the serving cell is unaware of them, so in the RACH retransmission process, the serving cell is not aware of the position of the UE's new RAR window, so this information needs to be synchronized.

In some embodiments, the terminal reports the newly selected RO, i.e., the first RO.

In some embodiments, a correspondence between the first RO and any SSB index is unique. Specifically, the following parameters can only be 1, 2, 4, 8, and 16. That is, one RO corresponds to 1/2/4/8/16, and no matter which SSB is used, it corresponds to the one RO.

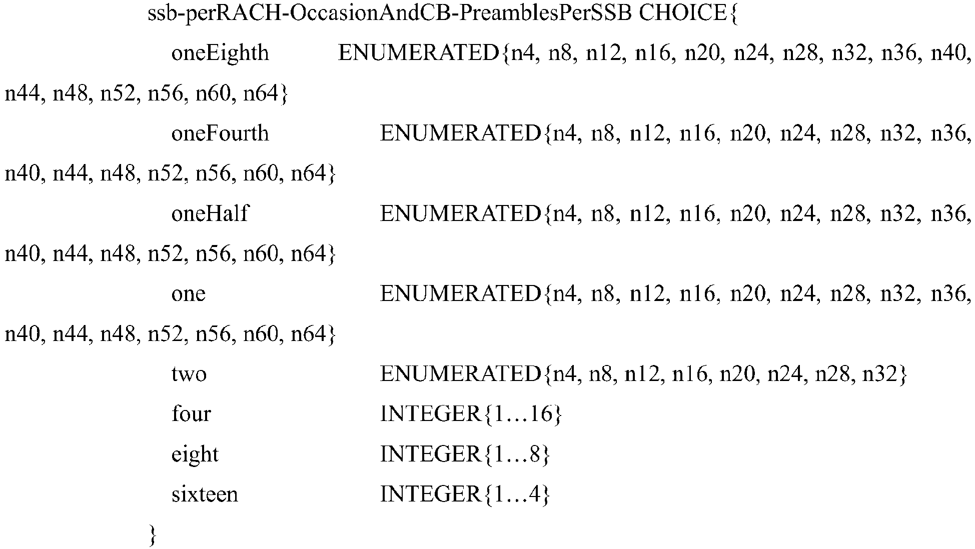

In some embodiments, after the terminal selects the new SSB index and RO, the RAR window is still determined according to the RO position for the initial transmission.

In embodiments of the present invention, individual steps may be implemented as independent embodiments. Some or all of the steps and their optional implementation manners may be arbitrarily combined with some or all of the steps in other embodiments and the optional implementation manners of other embodiments.

Embodiments of the present invention also provide an apparatus for implementing any of the above methods. For example, a communication apparatus is provided, which includes one or more units or modules for implementing various steps performed by the terminal in any of the above methods. For another example, another communication apparatus is provided, which includes one or more units or modules for implementing various steps performed by the network device (such as an access network device, a core network function node, a core network device, etc.) in any of the above methods

It should be understood that the division of the units or modules in the above apparatuses is only a division of logical functions, and all or part of these units or modules may be integrated into one physical entity or may be physically separated as required in implementation. In addition, the units or modules in the apparatus may be implemented in the form of processor calling software: for example, the apparatus includes a processor, the processor is connected to a memory, instructions are stored in the memory, and the processor calls the instructions stored in the memory to implement any of the above methods or implement the functions of various units or modules of the above apparatus. The processor is, for example, a general-purpose processor, such as a central processing unit (CPU) or a microprocessor, and the memory is a memory inside or outside the apparatus. Alternatively, the units or modules in the apparatus may be implemented in the form of hardware circuit, and the hardware circuit may be designed to implement the functions of some or all of the units or modules. The above hardware circuit may be understood as one or more processors. For example, in an implementation, the above hardware circuit is an application-specific integrated circuit (ASIC), and the functions of some or all of the above units or modules are realized by designing the logical relationship of components in the circuit. For example, in another implementation, the above hardware circuit may be realized by a programmable logic device (PLD). Taking a field programmable gate array (FPGA) as an example, it may include a large number of logic gate circuits, and the connection relationship between the logic gate circuits is configured by a configuration file, so as to realize the functions of some or all of the above units or modules. All units or modules of the above apparatus may be realized in the form of processor calling software or in the form of hardware circuit, or a part of them may be realized in the form of processor calling software, and the rest may be realized in the form of hardware circuit.

In embodiments of the present invention, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the hardware circuit is fixed or reconfigurable. For example, the processor is a hardware circuit implemented by an application-specific integrated circuit (ASIC) or a programmable logic device (PLD), such as FPGA. In a reconfigurable hardware circuit, the processor loads a configuration file to implement the process of hardware circuit configuration, which may be understood as a process where the processor loads instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

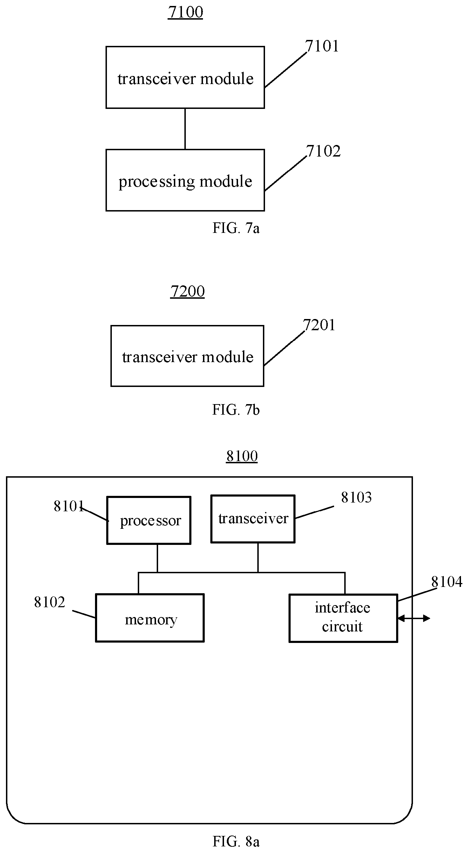

FIG. 7a is a schematic block diagram of a communication apparatus according to an example embodiment. As shown in FIG. 7a, the communication apparatus 7100 is, for example, the terminal mentioned above, and the apparatus 7100 includes: a transceiver module 7101 and a processing module 7102. In some embodiments, the transceiver module 7101 is configured to send first information. Optionally, the transceiver module 7101 is configured to perform, but not limited to, at least one of the communication (such as sending and/or receiving) steps S2101 and S2103 performed by the terminal in any of the above methods, which will not be repeated here. Optionally, the processing module 7102 is configured to perform, but not limited to, the processing related steps as performed by the terminal in any of the above methods, which will not be repeated here.

FIG. 7b is a schematic block diagram of another communication apparatus according to an example embodiment. As shown in FIG. 7b, the communication apparatus 7200 is, for example, the network device mentioned above. The network device is a network device corresponding to the serving cell, or a network device corresponding to the candidate cell. The apparatus 7200 includes: a transceiver module 7201. Of course, the apparatus 7200 may also include any possible modules such as a processing module, which is not limited in the present invention. In some embodiments, the transceiver module 7201 is configured to send second information. Optionally, the transceiver module 7201 is configured to perform, but not limited to, at least one of the communication (such as sending and/or receiving) steps S2102 and S2103 performed by the network device in any of the above methods, which will not be repeated here.

FIG. 8a is a schematic diagram of a communication device 8100 according to embodiments of the present invention. The communication device 8100 may be a network device (e.g., an access network device, a core network device, etc.), or a terminal (e.g., a user equipment, etc.), or a chip, chip system or processor that supports a network device to implement any of the above methods, or a chip, chip system or processor that supports a terminal to implement any of the above methods. The communication device 8100 may be configured to implement the method described in the above method embodiments, and for details, reference may be made to the description in the above method embodiments.

As shown in FIG. 8a, the communication device 8100 includes one or more processors 8101. The processor 8101 may be a general-purpose processor or a dedicated processor, for example, a baseband processor or a central processing unit. The baseband processor may be configured to process the communication protocol and the communication data, and the central processing unit may be configured to control the communication device (such as a base station, a baseband chip, a terminal, a terminal chip, a DU or a CU, etc.), execute a program, and process the data of the program. The communication device 8100 is configured to perform any of the above methods.

In some embodiments, the communication device 8100 further includes one or more memories 8102 for storing instructions. Optionally, all or part of the memories 8102 may also be set outside the communication device 8100.

In some embodiments, the communication device 8100 further includes one or more transceivers 8103. In a case where the communication device 8100 includes one or more transceivers 8103, the transceiver 8103 is configured to perform, but not limited to, at least one of the communication (including sending and/or receiving) steps S2101, S2102 or S2103 as described in the above methods. The processor 8101 is configured to perform, but not limited to, other steps.

In some embodiments, the transceiver may include a receiver and/or a transmitter, and the receiver and the transmitter may be separate or integrated together. Optionally, the terms such as transceiver, transceiver unit, transceiver machine, transceiver circuit, etc. are interchangeable, the terms such as transmitter, transmitting unit, transmitting machine, transmitting circuit, etc. are interchangeable, and the terms such as receiver, receiving unit, receiving machine, receiving circuit, etc. are interchangeable.

In some embodiments, the communication device 8100 may include one or more interface circuits 8104. Optionally, the one or more interface circuits 8104 are connected to the memory 8102, and may be configured to receive signals from the memory 8102 or other devices, and send signals to the memory 8102 or other devices. For example, the one or more interface circuits 8104 may read instructions stored in the memory 8102 and send the instructions to the processor 8101.

The communication device 8100 described in the above embodiments may be a network device or a terminal, but the scope of the communication device 8100 described in the present invention is not limited thereto, and the structure of the communication device 8100 may not be limited by FIG. 7a. The communication device may be a stand-alone device or may be part of a larger device. For example, the communication device may be: 1) a stand-alone integrated circuit (IC), a chip, or a chip system or subsystem; (2) a set of one or more ICs, optionally, the set of ICs may also include a storage component for storing data and programs; (3) an ASIC, such as a Modem; (4) a module that may be embedded in other devices; (5) a receiver, a terminal, an intelligent terminal, a cellular phone, a wireless device, a handheld machine, a mobile unit, a vehicle-mounted device, a network device, a cloud device, an artificial intelligence device, etc.; (6) others.

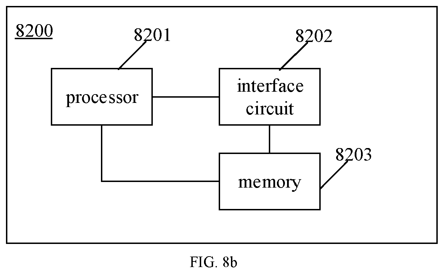

FIG. 8b is a schematic diagram of a chip 8200 according to embodiments of the present invention. In the case where the communication device 8100 may be a chip or chip system, reference may be made to the schematic diagram of the structure of the chip 8200 shown in FIG. 8b, but the present invention is not limited thereto.

The chip 8200 includes one or more processors 8201, and configured to execute any of the above methods.

In some embodiments, the chip 8200 further includes one or more interface circuits 8202. Optionally, the interface circuit(s) 8202 is connected to the memory 8203, and may be configured to receive signals from the memory 8203 or other devices, and/or send signals to the memory 8203 or other devices. For example, the interface circuit(s) 8202 may read the instructions stored in the memory 8203 and send the instructions to the processor 8201.

In some embodiments, the interface circuit(s) 8202 is configured to perform, but not limited to, at least one of the communication (including sending and/or receiving) steps S2101, S2102 or S2103 as described in the above methods. The processor 8201 is configured to perform, but not limited to, other steps.

In some embodiments, the terms such as interface circuit, interface, transceiver pin, transceiver, etc. are interchangeable.

In some embodiments, the chip 8200 further includes one or more memories 8203 for storing instructions. Optionally, all or part of the memories 8203 may be set outside the chip 8200.

The present invention also provides a storage medium having stored therein instructions that, when run on the communication device 8100, cause the communication device 8100 to perform any of the above methods. Optionally, the storage medium is an electronic storage medium. Optionally, the storage medium is a computer-readable storage medium, but is not limited thereto, and it may also be a storage medium readable by other devices. Optionally, the storage medium may be a non-transitory storage medium, but is not limited thereto this, and it may also be a temporary storage medium.

The present invention also provides a program product that, when executed by the communication device 8100, causes the communication device 8100 to perform any of the above methods. Optionally, the program product is a computer program product.

The present invention also provides a computer program that, when run on a computer, causes the computer to execute any one of the above methods.

The present invention provides a method for determining a transmission beam used in a random access process for TA measurement of a candidate cell in LTM, which enables a terminal to obtain the TA value of the candidate cell in advance, so that uplink handshake is no longer required during the cell handover, thereby reducing the delay of the cell handover.

## Claims

1. A communication method, performed by a terminal, comprising:
sending first information to a candidate cell, wherein the first information is configured for obtaining a timing advance (TA) corresponding to the candidate cell; and
determining a first beam indicated by a first transmission configuration indication (TCI) state, wherein the first beam is configured for receiving the TA corresponding to the candidate cell sent by a serving cell.

2. The method according to claim 1, wherein the first TCI state comprises at least one of:
a TCI state for receiving second information, wherein the second information is configured to trigger the terminal to send the first information to the candidate cell;
a TCI state indicated by the serving cell for the terminal; or
a TCI state indicated by the serving cell for a typel physical downlink control channel (PDCCH).

3. The method according to claim 1, wherein the first TCI state comprises: a TCI state indicated by the serving cell for the terminal, and a TCI state indicated by the serving cell for a typel PDCCH;
wherein the TCI state indicated by the serving cell for the typel PDCCH is configured for receiving the typel PDCCH, and the TCI state indicated by the serving cell for the terminal is configured for receiving a physical downlink shared channel (PDSCH) scheduled by the typel PDCCH.

4. The method according to any one of claims 1 to 3, further comprising:
retransmitting the first information to the candidate cell, in a case where the terminal fails to receive the TA by using the first beam.

5. The method according to claim 4, further comprising:
receiving the TA sent by the serving cell by using a second beam indicated by a second TCI state.

6. The method according to claim 5, wherein the second TCI state comprises at least one of:
a TCI state for receiving second information, wherein the second information is configured to trigger the terminal to send the first information to the candidate cell;
a TCI state indicated by the serving cell for the terminal; or
a TCI state indicated by the serving cell for a typel PDCCH.

7. The method according to claim 5, wherein the second TCI state comprises: a TCI state indicated by the serving cell for the terminal, and a TCI state indicated by the serving cell for a typel PDCCH;
wherein the TCI state indicated by the serving cell for the typel PDCCH is configured for receiving the typel PDCCH, and the TCI state indicated by the serving cell for the terminal is configured for receiving a PDSCH scheduled by the typel PDCCH.

8. The method according to any one of claims 4 to 7, wherein retransmitting the first information to the candidate cell comprises:
retransmitting the first information to the candidate cell by using a third beam indicated by third information, wherein the third information is configured to trigger the terminal to send the first information to the candidate cell.

9. The method according to any one of claims 4 to 7, wherein retransmitting the first information to the candidate cell comprises:
retransmitting the first information to the candidate cell by using a fourth beam, wherein the fourth beam is determined by the terminal based on an implementation of the terminal for retransmitting the first information.

10. The method according to claim 9, further comprising:
sending fourth information to the serving cell, wherein the fourth information indicates a first random access channel occasion (RO) for retransmitting the first information.

11. The method according to any one of claims 5 to 7, wherein receiving the TA sent by the serving cell by using the second beam indicated by the second TCI state comprises:
receiving the TA sent by the serving cell by using the second beam within a first time window, wherein the first time window is determined according to an RO indicated by third information, and the third information is configured to trigger the terminal to send the first information to the candidate cell.

12. The method according to any one of claims 1 to 11, wherein the first TCI state comprises at least one of:
a downlink TCI state; or
a joint TCI state, wherein the joint TCI state indicates both a beam for uplink communication and a beam for downlink communication.

13. A communication method, performed by a serving cell, comprising:
sending a timing advance (TA) corresponding to a candidate cell to a terminal by using a first beam indicated by a first transmission configuration indication (TCI) state, wherein the TA is determined by the candidate cell according to first information sent by the terminal.

14. The method according to claim 13, wherein the first TCI state comprises at least one of:
a TCI state for sending second information, wherein the second information is configured to trigger the terminal to send the first information to the candidate cell;
a TCI state indicated by the serving cell for the terminal; or
a TCI state indicated by the serving cell for a typel physical downlink control channel (PDCCH).

15. The method according to claim 13, wherein the first TCI state comprises: a TCI state indicated by the serving cell for the terminal, and a TCI state indicated by the serving cell for a typel PDCCH;
wherein the TCI state indicated by the serving cell for the typel PDCCH is configured for receiving the typel PDCCH, and the TCI state indicated by the serving cell for the terminal is configured for receiving a physical downlink shared channel (PDSCH) scheduled by the typel PDCCH.

16. The method according to any one of claims 13 to 15, further comprising:
sending the TA by using a second beam indicated by a second TCI state, in a case where the terminal fails to receive the TA by using the first beam, wherein the first information for determining the TA is retransmitted by the terminal to the candidate cell.

17. The method according to claim 16, wherein the second TCI state comprises at least one of:
a TCI state for sending second information, wherein the second information is configured to trigger the terminal to send the first information to the candidate cell;
a TCI state indicated by the serving cell for the terminal; or
a TCI state indicated by the serving cell for a typel PDCCH.

18. The method according to claim 16, wherein the second TCI state comprises: a TCI state indicated by the serving cell for the terminal, and a TCI state indicated by the serving cell for a typel PDCCH;
wherein the TCI state indicated by the serving cell for the typel PDCCH is configured for sending the type1 PDCCH, and the TCI state indicated by the serving cell for the terminal is configured for sending a PDSCH scheduled by the type1 PDCCH.

19. The method according to any one of claims 16 to 18, wherein the first information is retransmitted by the terminal to the candidate cell by using a third beam indicated by third information, and the third information is configured to trigger the terminal to send the first information to the candidate cell.

20. The method according to any one of claims 16 to 18, wherein the first information is retransmitted by the terminal to the candidate cell by using a fourth beam, and the fourth beam is determined by the terminal based on an implementation of the terminal for retransmitting the first information.

21. The method according to claim 20, further comprising:
receiving fourth information, wherein the fourth information indicates a first random access channel occasion (RO) for retransmitting the first information.

22. The method according to any one of claims 16 to 18, wherein sending the TA by using the second beam indicated by the second TCI state comprises:
sending the TA by using the second beam within a first time window, wherein the first time window is determined according to an RO indicated by third information, and the third information is configured to trigger the terminal to send the first information to the candidate cell.

23. The method according to any one of claims 13 to 21, wherein the first TCI state comprises at least one of:
a downlink TCI state; or
a joint TCI state, wherein the joint TCI state indicates both a beam for uplink communication and a beam for downlink communication.

24. A communication method, comprising:
sending first information from a terminal to a candidate cell, wherein the first information is configured for obtaining a timing advance (TA) corresponding to the candidate cell;
sending the TA from the candidate cell to a serving cell; and
sending the TA from the serving cell to the terminal by using a first beam indicated by a first transmission configuration indication (TCI) state.

25. A terminal, comprising:
a transceiver module, configured to send first information to a candidate cell, wherein the first information is configured for obtaining a timing advance (TA) corresponding to the candidate cell; and
a processing module, configured to determine a first beam indicated by a first transmission configuration indication (TCI) state, wherein the first beam is configured for receiving the TA corresponding to the candidate cell sent by a serving cell.

26. A network device, comprising:
a transceiver module, configured to send a timing advance (TA) corresponding to a candidate cell to a terminal by using a first beam indicated by a first transmission configuration indication (TCI) state, wherein the TA is determined by the candidate cell according to first information sent by the terminal.

27. A terminal, comprising one or more processors, and configured to perform the communication method according to any one of claims 1 to 12.

28. A network device, comprising one or more processors, and configured to perform the communication method according to any one of claims 13 to 22.

29. A communication system, comprising:
a terminal, configured to perform the communication method according to any one of claims 1 to 12, and
a network device, configured to perform the communication method according to any one of claims 13 to 22.

30. A storage medium having stored therein instructions that, when run on a communication device, cause the communication device to perform the communication method according to any one of claims 1 to 12 or claims 13 to 22.
